# EUROPÄISCHE PATENTSCHRIFT

(11) **EP 2 580 362 B1**
(45) Veröffentlichungstag und Bekanntmachung des Hinweises auf die Patenterteilung: **18.07.2018**
(21) Anmeldenummer: 10726467.3
(22) Anmeldetag: 10.06.2010
(51) Int. Cl.: C22C 1/04, C22C 9/02, F16C 33/12

(54) **VERFAHREN ZUR HERSTELLUNG EINES BLEIFREIEN GLEITLAGERS**
METHOD FOR PRODUCING A LEAD-FREE SLIDING BEARING
PROCÉDÉ DE FABRICATION D'UN PALIER LISSE SANS PLOMB

(43) Veröffentlichungstag der Anmeldung: 17.04.2013
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55246 Mainz-Kostheim (DE); LEWANDOWSKI, Roman, PL-80-299 Gdansk (PL); BRONISZEWSKI, Andrzej, PL-80-312 Gdansk (PL)
(74) Vertreter: Hoffmann Eitle
(86) Internationale Anmeldenummer: PCT/EP2010/058145
(87) Internationale Veröffentlichungsnummer: WO 2011/154039

(56) Entgegenhaltungen:
- EP-A1- 1 619 263
- EP-A2- 1 698 707
- WO-A1-2010/128076
- GB-A- 2 459 427
- US-A- 2 887 765
- US-A1- 2003 099 853

## Beschreibung

### TechnischesGebiet

Die Erfindung betrifft ein Verfahren zur Herstellung eines bleifreien Gleitlagers.

An Gleitlager werden verschiedenste Anforderungen gestellt. Diese betreffen beispielsweise die Korrosionsbeständigkeit, die Gleiteigenschaften und die Zerspanbarkeit.

### Stand der Technik

Die US 2003 099853 betrifft ein Verfahren zur Herstellung eines bleifreien Gleitlagers, bei dem ein Werkstoff auf Kupferbasis mit 0,5% bis 3% Silizium gesintert wird. Die DE 10 2007 049 383 A1 betrifft einen Verbundwerkstoff und ein Verfahren zu dessen Herstellung, der aus einem Träger aus Stahl und einer Auflage aus einer aushärtbaren Kupferlegierung besteht, die mittels Walzplattieren aufgebracht wird.

Aus der DE 10 2005 014 302 A1 geht ein Verfahren zur Herstellung eines Gleitlagers aus einer Kupfer-Mehrstofflegierung hervor, bei dem zumindest ein Phasenbestandteil an der Gleitoberfläche mittels einer Säure herausgelöst wird.

### Darstellung der Erfindung

Der Erfindung liegt die Aufgabe zugrunde, ein Verfahren zur Herstellung eines Gleitlagers zu schaffen, mit dem Gleitlager mit verbesserten Eigenschaften, insbesondere im Hinblick auf die Korrosionsbeständigkeit, gefertigt werden können.

Die Lösung dieser Aufgabe erfolgt durch das im Anspruch 1 beschriebene Verfahren.

Demzufolge wird ein Werkstoff auf Kupferbasis mit insgesamt 0,1% bis 3% der Elemente Aluminium, Magnesium, Silizium, Titan, Zirkon und Chrom gesintert. Zur Herstellung des Gleitlagers kann eine derartige Legierung insbesondere auf einen Stahlrücken aufgesintert werden. Die genannten Elemente wirken hierbei in vorteilhafter Weise als Korrosionsinhibitoren. Es hat sich herausgestellt, dass der neuartige Werkstoff auf bestehenden Sinteranlagen bei einer Sintertemperatur bis 1000°C hergestellt werden kann. Es sei ferner erwähnt, dass für die Herstellung des im Rahmen der Erfindung benötigten Sinterpulvers der Zusammensetzung Cu(Sn)X mit X = Aluminium, Magnesium, Silizium, Titan, Zirkon, Chrom, in wirtschaftlich günstiger Weise, beispielsweise in einem Verdüsungsprozess, die Verwendung von Spänen denkbar ist. Es hat sich ferner als erforderlich erwiesen, den hierin beschriebenen neuartigen Werkstoff des Typs CuX mit X = Al, Mg, Si, Ti, Zr, Cr vor dem Sintern mit Zinn- und/oder Kupferpulver zu mischen. Hierdurch wird ein Werkstoff bereitgestellt, der besonders gut auf Stahl aufgesintert werden kann. Die genannten Elemente wirken ferner als Sinteradditive, um den Effekt auszugleichen, dass der beschriebene Werkstoff und die als Korrosionsinhibitoren wirkenden Elemente an Luft passivieren. Bevorzugte Weiterbildungen sind in den weiteren Ansprüchen beschrieben.

Bei ersten Versuchen hat sich herausgestellt, dass der angestrebte Korrosionsschutz bereits bei Konzentrationen der genannten Elemente von mindestens 0,2% und/oder höchstens 1% eintritt.

In vorteilhafter Weise kann der neuartige Werkstoff ferner bis zu 15%, insbesondere 6% Zinn enthalten. Hierdurch können in vorteilhafter Weise die Härte und die Gleiteigenschaften entsprechend dem Anforderungsprofil eingestellt werden. Die Obergrenze des Zinnanteils ist dadurch gegeben, dass ein erhöhter Zinnanteil die Wärmeleitfähigkeit herabsetzt. Um somit eine ausreichend hohe Wärmeleitfähigkeit zu erzielen, haben sich die angegebenen Grenzwerte als vorteilhaft erwiesen.

Die Gleiteigenschaften und die Zerspanbarkeit des erfindungsgemäß hergestellten Gleitlagers kann in vorteilhafter Weise dadurch verbessert werden, dass im Rahmen der Pulverherstellung für den Sinterprozess Hartpartikel, wie z.B. Oxide, Karbide, Nitride und Phosphide, und/oder Feststoffschmiermittel, wie z.B. h-BN und Kohlenstoff, zugefügt werden. Ferner können sogenannte Spanbrecher in einem dem Sintern vorgeschalteten Prozess zugeführt werden.

Eine Absenkung der Sintertemperatur ist in vorteilhafter Weise durch die bevorzugte gezielte Erhöhung des Feinanteils, d.h. Partikel von < 5 µm, auf mindestens 5% möglich. Dies bietet ferner den Vorteil, dass der technisch bedingte hohe Anteil an feinem Pulver im Rahmen der Erfindung genutzt werden kann, ohne die Fließeigenschaften negativ zu beeinflussen.

## Patentansprüche

1. Verfahren zur Herstellung eines bleifreien Gleitlagers, bei dem ein Werkstoff auf Kupferbasis mit insgesamt 0,1% bis 3% der Elemente Aluminium, Magnesium, Silizium, Titan, Zirkon und Chrom gesintert wird, wobei der Werkstoff vor dem Sintern mit Zinn- und/oder Kupferpulver vermischt wird.

2. Verfahren nach Anspruch 1,
**dadurch gekennzeichnet, dass**
der Werkstoff insgesamt mindestens 0,2% und/oder höchstens 1% der Elemente Aluminium, . Magnesium, Silizium, Titan, Zirkon und Chrom enthält.

3. Verfahren nach Anspruch 1 oder 2,
**dadurch gekennzeichnet, dass**
der Werkstoff bis zu 15%, insbesondere 6% Zinn enthält.

4. Verfahren nach einem der vorangehenden Ansprüche,
**dadurch gekennzeichnet, dass**
der Werkstoff ferner ein Feststoffschmiermittel, wie z.B. h-BN und/oder C enthält.

5. Verfahren nach einem der vorangehenden Ansprüche,
**dadurch gekennzeichnet, dass**
der Werkstoff ferner Hartteilchen, wie z.B. Oxide, Karbide, Nitride und/oder Phosphide enthält.

6. Verfahren nach einem der vorangehenden Ansprüche,
**dadurch gekennzeichnet, dass**
der Werkstoff ferner Spanbrecher enthält.

7. Verfahren nach einem der vorangehenden Ansprüche,
**dadurch gekennzeichnet, dass**
der Werkstoff mindestens 5% von Partikeln mit einer Größe von < 5 µm aufweist.

## Claims

1. A method for the production of a lead-free sliding bearing, wherein a copper-based material with a total of 0.1% to 3% of the elements aluminium, magnesium, silicon, titanium, zirconium and chromium is sintered, the material being mixed with tin and/or copper powder prior to sintering.

2. The method according to Claim 1,
**characterised in that** the material contains a total of at least 0.2% and/or at most 1% of the elements aluminium, magnesium, silicon, titanium, zirconium and chromium.

3. The method according to Claim 1 or 2,
**characterised in that** the material contains up to 15%, in particular 6% of tin.

4. The method according to any of the preceding claims,
**characterised in that** the material also contains a solid lubricant, such as e.g. h-BN and/or C.

5. The method according to any of the preceding claims,
**characterised in that** the material also contains hard particles, such as e.g. oxides, carbides, nitrides and/or phosphides.

6. The method according to any of the preceding claims,
**characterised in that** the material also contains chip breakers.

7. The method according to any of the preceding claims,
**characterised in that** the material comprises at least 5% of particles having a size of < 5 µm.

## Revendications

1. Procédé de fabrication d'un palier lisse sans plomb, dans lequel un matériau à base de cuivre avec au total 0,1% à 3 % des éléments aluminium, magnésium, silicium, titane, zirconium et chrome est fritté, le matériau étant mélangé à de la poudre d'étain et/ou de cuivre avant le frittage.

2. Procédé selon la revendication 1, **caractérisé en ce que** le matériau contient au total au moins 0,2% et/ou au plus 1% des éléments aluminium, magnésium, silicium, titane, zirconium et chrome.

3. Procédé selon la revendication 1 ou 2, **caractérisé en ce que** le matériau contient jusqu'à 15 %, en particulier 6 %, d'étain.

4. Procédé selon l'une quelconque des revendications précédentes, **caractérisé en ce que** le matériau contient en outre un lubrifiant solide, par exemple h-BN et/ou C.

5. Procédé selon l'une quelconque des revendications précédentes, **caractérisé en ce que** le matériau contient en outre des particules dures, par exemple des oxydes, des carbures, des nitrures et/ou des phosphures.

6. Procédé selon l'une quelconque des revendications précédentes, **caractérisé en ce que** le matériau contient en outre des brise-copeaux.

7. Procédé selon l'une quelconque des revendications précédentes, **caractérisé en ce que** le matériau comporte au moins 5 % de particules d'une dimension < 5 µm.
